(19) **Europäisches Patentamt European Patent Office Office européen des brevets**

(11) **EP 4 679 762 A1**

(12) **EUROPEAN PATENT APPLICATION**
published in accordance with Art. 153(4) EPC

(43) Date of publication:
**14.01.2026 Bulletin 2026/03**

(21) Application number: **24767433.6**

(22) Date of filing: **07.03.2024**

(51) International Patent Classification (IPC):
*H04L 9/00* (2022.01)   *G06F 7/523* (2006.01)
*G06F 7/72* (2006.01)   *G06F 17/14* (2006.01)
*G06F 7/544* (2006.01)   *G06F 9/30* (2018.01)
*G06F 9/38* (2018.01)

(52) Cooperative Patent Classification (CPC):
**G06F 7/523; G06F 7/544; G06F 7/72; G06F 9/30; G06F 9/38; G06F 17/14; H04L 9/00**

(86) International application number:
**PCT/KR2024/002953**

(87) International publication number:
**WO 2024/186145 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.03.2023   KR 20230030075**
**05.10.2023   KR 20230132856**
**06.10.2023   KR 20230133715**
**06.03.2024   KR 20240032082**

(71) Applicant: **CRYPTO LAB INC.**
**Gwanak-gu, Seoul 08826 (KR)**

(72) Inventors:
- **BAE, Youngjin**
  **Seoul 08826 (KR)**
- **KIM, Jaehyung**
  **Stanford, CA 94305 (US)**
- **STEHLE, Damien**
  **Seoul 08826 (KR)**

(74) Representative: **Dragotti & Associati S.P.A.**
**Via Nino Bixio, 7**
**20129 Milano (IT)**

(54) **ELECTRONIC DEVICE FOR PROCESSING HOMOMORPHIC CIPHERTEXT FOR BINARY DATA AND METHOD THEREFOR**

(57)     An electronic device for rebooting a homomorphic ciphertext is disclosed. The present device comprises a communication unit, a memory, and a processor. When a ciphertext obtained by homomorphically encrypting binary data is received from at least one external device via the communication unit, the processor stores the ciphertext in the memory, performs a ModRaise task for increasing a modulus of the ciphertext, removes an error in the ciphertext by applying a trigonometric function to the ciphertext having the increased modulus, and expands a plaintext space in the ciphertext. Accordingly, a homomorphic ciphertext of a message including binary data can be efficiently processed.

FIG. 4

**Description**

[Technical Field]

The present disclosure relates to an electronic device for efficiently processing a homomorphic ciphertext for binary data, and a method therefor.

[Background Art]

As communication technology develops and electronic devices spread, efforts are continuously made to maintain communication security between the electronic devices. Accordingly, encryption/decryption technology is used in most communication environments.

When messages encrypted by the encryption technology are delivered to the other party, the other party needs to perform decryption in order to use the messages. In this case, the other party wastes resources and time during decrypting the encrypted data. In addition, when the third party hacks messages while the other party temporarily decrypts the messages for operation, there is a problem in that the messages may be easily leaked to the third party.

In order to solve this problem, a homomorphic encryption method is being studied. According to the homomorphic encryption, even if an operation is performed on ciphertexts themselves without decrypting the encrypted information, it is possible to obtain the same result as the encrypted value after an operation on a plaintext. Accordingly, various types of operations may be performed without decrypting the ciphertext.

However, when the ciphertext obtained by homomorphically encrypting a message composed of binary data is provided, there is a problem that it is difficult to efficiently perform the operation on the ciphertext according to conventional techniques.

In addition, when the homomorphic operation such as homomorphic multiplication is performed, the plaintext space in the homomorphic ciphertext is reduced, and when the plaintext space is reduced to a certain size or less, the operation is no longer possible. In order to solve this problem, after performing the operation on the homomorphic ciphertext a certain number of times or more, a reboot is performed to expand the plaintext space of the homomorphic ciphertext. According to the conventional techniques, there was also a problem that the reboot was not efficiently performed on learning with errors (LWE) ciphertexts obtained by homomorphically encrypting the binary data.

[Disclosure]

[Technical Problem]

The present disclosure is to efficiently perform various operations or reboots on homomorphic ciphertext for binary data.

[Technical Solution]

According to an aspect of the present disclosure, an electronic device includes a communication unit, a memory, and a processor, in which the processor is configured to, based on a ciphertext obtained by homomorphically encrypting binary data being received from at least one external device through the communication unit, store the ciphertext in the memory, perform a ModRaise task for increasing a modulus of the ciphertext, and apply a trigonometric function to the ciphertext having the increased modulus to remove an error in the ciphertext, and expand a plaintext space in the ciphertext.

The processor may be configured to perform a first transformation task for transforming a plurality of slot values in the ciphertext into a plurality of coefficient values, select a scaling factor for reducing a message in the ciphertext by a preset size from among a scaling factor set pre-stored in the memory, apply the selected scaling factor to the ciphertext transformed by the first transformation task for reducing the size of the ciphertext and perform the ModRaise task on the reduced ciphertext, perform a second transformation task for transforming the coefficient value of the ciphertext having the modulus increased by the ModRaise task into the slot value, and apply the trigonometric function to the ciphertext transformed by the second transformation task.

Based on the number of ciphertexts stored in the memory being plural, the processor may be configured to match ciphertexts to be operated among the plurality of ciphertexts to operate the ciphertexts, perform a ring packing task for transforming each of the operated ciphertexts into one ring learning with errors (R-LWE) ciphertext, and perform the ModRaise task on the R-LWE ciphertext.

The processor may be configured to transform a coefficient value of the R-LWE ciphertext having the modulus increased by the ModRaise task into a slot value, remove an error in the transformed R-LWE ciphertext and to, expand the plaintext space by applying the trigonometric function to the transformed R-LWE ciphertext to, and transform the slot value of the R-LWE ciphertext with the expanded plaintext space into a coefficient value to acquire an LWE ciphertext to which the gate operation is applied.

According to another aspect of the present disclosure, a method of processing a homomorphic ciphertext of an electronic device includes receiving and storing a ciphertext obtained by homomorphically encrypting binary data from at least one external device, performing a ModRaise task for increasing a modulus of the ciphertext, and applying a trigonometric function to the ciphertext having the increased modulus to remove the error in the ciphertext, and expanding a plaintext space in the ciphertext.

The performing of the ModRaise task may include performing a first transformation task for transforming a plurality of slot values in the ciphertext into a plurality of coefficient values, selecting a scaling factor for reducing a message in the ciphertext by a preset size from among a pre-stored scaling factor set, reducing a size of the ciphertext by applying the selected scaling factor to the ciphertext transformed by the first transformation task, and performing the ModRaise task on the reduced ciphertext.

The expanding of the plaintext space may include performing a second transformation operation for transforming the coefficient value of the ciphertext having the increased modulus by the ModRaise task into a slot value, and applying the trigonometric function to the ciphertext transformed by the second transformation task for removing an error in the ciphertext, and expanding the plain text space in the ciphertext.

The method may further include based on the number of ciphertexts is plural, matching ciphertexts to be operated among the plurality of homomorphic ciphertexts to operate the ciphertexts, and performing a ring packing task for transforming each of the operated ciphertexts into one ring learning with errors (R-LWE) ciphertext.

The ModRaise task may be applied to the R-LWE ciphertext.

The expanding of the plaintext space in the ciphertext may include performing a transformation task for transforming a coefficient value of the R-LWE ciphertext having the modulus increased by the ModRaise task into a slot value, performing a gate operation reboot to remove an error in the transformed R-LWE ciphertext, and to expand the plaintext space by applying the trigonometric function to the transformed R-LWE ciphertext, and performing a transformation task for transforming slot values of the R-LWE ciphertext in which the plaintext space is expanded into coefficient values to acquire an LWE ciphertext to which the gate operation is applied.

[Advantageous Effects]

According to various embodiments as described above, it is possible to efficiently perform various operations or reboots on the homomorphic ciphertext for binary data.

[Description of Drawings]

FIG. 1 is a diagram for describing an operation of an electronic device according to at least one embodiment of the present disclosure.

FIG. 2 is a block diagram for describing a configuration of an electronic device according to at least one embodiment of the disclosure.

FIG. 3 is a diagram for describing a reboot of a homomorphic ciphertext.

FIG. 4 is a flowchart for describing a method of processing a homomorphic ciphertext of an electronic device according to at least one embodiment of the present disclosure.

FIG. 5 is a diagram for describing a process of rebooting a homomorphic ciphertext for binary data.

FIG. 6 is a diagram illustrating an example of a trigonometric function used in the reboot of FIG. 5.

FIG. 7 is a diagram for describing a process of performing a gate operation reboot process on the homomorphic ciphertext for binary data.

FIG. 8 is a diagram illustrating examples of gate operation functions used in the gate operation reboot process of FIG. 7.

FIG. 9 is a graph showing trigonometric functions included in each gate operation function of FIG. 8.

FIG. 10 is a diagram illustrating other examples of the gate operation functions used in the gate operation reboot process.

FIG. 11 is a graph showing the trigonometric functions included in each gate operation function of FIG. 10.

FIG. 12 is a diagram for describing a form of ciphertext generated in the gate operation reboot process according to at least one embodiment of the present disclosure.

FIG. 13 is a flowchart for describing a homomorphic ciphertext processing method of performing a binary reboot according to at least one embodiment of the present disclosure.

FIG. 14 is a flowchart for describing a homomorphic ciphertext processing method of performing a gate operation reboot according to at least one embodiment of the present disclosure.

[Mode for Invention]

Hereinafter, the present disclosure will be described in detail with reference to the accompanying drawings. Encryption/decryption may be applied to an information (data) transmission process performed in the present disclosure if necessary, and all expressions describing the information (data) transmission process in the present disclosure and claims should be interpreted as including cases of encryption/decryption even if not separately stated. In the present disclosure, expressions such as "transmission (delivery) from A to B" or "A receiving from B" include transmission (delivery) or reception with another medium included therebetween, and does not necessarily express only what is directly transmitted (delivered) or received from A to B.

In the description of the present disclosure, the order of each step should be understood as non-limiting unless the preceding step needs to be logically and temporally performed necessarily before the following step. In other words, except for the above exceptional cases, even if the process described as the following step is performed before the process described as the preceding step, the nature of the disclosure is not affected, and the scope should also be defined regardless of the order of the steps. In this specification, "A or B" is defined to mean not only selectively indicating either one of A and B, but also including both A and B. In addition, in the present disclosure, the term "include" has a meaning encompassing further including other components in addition to elements listed as included.

In this disclosure, only essential components necessary for the description of the present disclosure are described, and components unrelated to the essence of the present disclosure are not mentioned. In addition, it should not be interpreted as an exclusive meaning that includes only the mentioned components, but should be interpreted as a non-exclusive meaning that may include other components.

In addition, in the present disclosure, "value" is defined as a concept including a vector as well as a scalar value. In the present disclosure, the expressions such as "compute," and "calculate" may be replaced by an expression that calculates a result of the corresponding computation or operation. In addition, unless otherwise stated, an operation on a ciphertext to be described below means a homomorphic operation. For example, an addition of the homomorphic ciphertext means a homomorphic addition of two homomorphic ciphertexts.

Mathematical calculation and computations in each step of the present disclosure to be described below may be implemented as computer calculations by the known coding method and/or coding designed to suit the present disclosure in order to perform the corresponding calculation or computation.

Specific equations to be described below are illustratively described among possible alternatives, and the scope of the present disclosure should not be construed as being limited to equations mentioned in the present disclosure.

For convenience of description, in the present disclosure, a notation is defined as follows.

$a \leftarrow D$: select element (a) according to distribution (D)
$s1, s2 \in R$: S1, S2: Each of S1 and S2 is an element belonging to set R
mod(q): Modular operation with element q

$\lfloor \cdot \rceil$ : Round-off internal value

Hereinafter, various embodiments of the present disclosure will be described in detail with reference to the accompanying drawings.

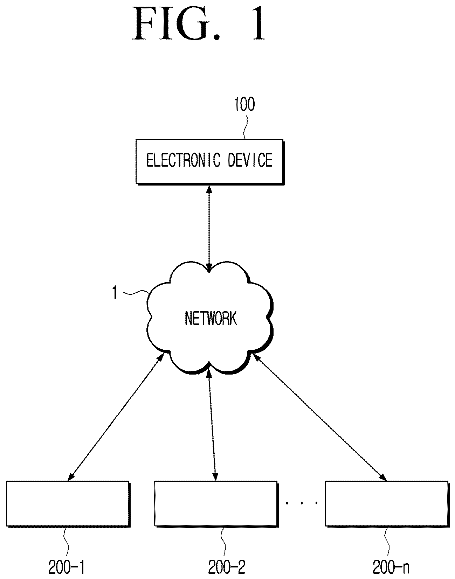

FIG. 1 is a diagram for describing an operation of an electronic device according to at least an embodiment of the present disclosure. Referring to FIG. 1, an electronic device 100 may be connected to a plurality of external devices 200-1 to 200-n via a network 1.

For convenience of description, the devices 200-1 to 200-n connected to the electronic device 100 are collectively referred to as external devices in the following description, but each device 200-1 to 200-n may be implemented as various types of electronic devices having communication functions.

The electronic device 100 may be implemented in various forms such as a server device, a PC, a laptop PC, a mobile phone, a tablet PC, and a kiosk. When implemented as a server device, the electronic device 100 may be implemented as various computing devices such as a workstation, a cloud, a data drive, and a data station.

The network 1 may include both a wired network and a wireless network. The wired network includes a cable network, a telephone network, etc., and the wireless network may include any network that transmits and receives signals through radio waves. The wired network and the wireless network may be connected to each other.

Each external device 200-1 to 200-n may generate a ciphertext. Specifically, each external device 200-1 to 200-n may generate a homomorphic ciphertext obtained by homomorphically encrypting a message.

Each external device 200-1 to 200-n may include encryption noise, i.e., an error, calculated during performing homomorphic encryption in a ciphertext. The homomorphic ciphertext with errors may be called a learning with errors (LWE) ciphertext.

Specifically, the homomorphic ciphertexts generated by each external device 200-1 to 200-n may be generated in a form in which a result value including a message and an error value is restored when decrypted later using a secret key.

For example, when the homomorphic ciphertexts generated by each external device 200-1 to 200-n are decrypted using the secret key, the homomorphic ciphertexts may be generated in a form that satisfies the following natures.

## [Equation 1]

$$Dec(ct, sk) = <ct, sk> = M+e(mod\ q)$$

Here, $<,>$ denotes a usual inner product, ct denotes a ciphertext, sk denotes a secret key, M denotes a plaintext message, e denotes an encryption error value, and mod q denotes a modulus of a ciphertext. q should be selected to be greater than a result value M obtained by multiplying a scaling factor $\Delta$ by a message. When an absolute value of the error value e is sufficiently small compared to M, a decryption value M+e of the ciphertext is a value that may replace the original message with the same precision in significant figure operation. Among the decrypted data, an error may be arranged on the least significant bit (LSB) side, and M may be arranged on the next least significant bit side.

When a size of the message is too small or too large, the size may be adjusted using a scaling factor. When the scaling factor is used, not only an integer type message but also a real number type message may be encrypted, and thus, the usability of the message may be greatly increased. In addition, by adjusting the size of the message using the scaling factor, a size of an area where messages exist in the ciphertext after the operation is made, that is, a size of an effective area may also be adjusted.

According to the embodiment, a modulus q of the ciphertext may be set and used in various forms. For example, the modulus of the ciphertext may be set in the form of an exponential power $q=\Delta^L$ of the scaling factor $\Delta$. When $\Delta$ is 2, $\Delta$ may be set to a value such as $q=2^{10}$.

In addition, the homomorphic ciphertext according to the present disclosure is described on the assumption that a fixed point is used, but may be applied even when a floating point is used.

In order to generate the ciphertext, each external device 200-1 to 200-n may generate an encryption key. The encryption key includes the secret key and a public key.

For example, one external device (e.g., 200-1) may generate the public key using a Ring-LWE technique. Specifically, the external device 200-1 may first set various parameters and rings and store the set various parameters and rings in its own memory. Examples of the parameters may include lengths of plaintext message bits, sizes of public and secret keys, and the like.

The ring may be expressed by the following Equation.

## [Equation 2]

$$R= Z_q[X]/f(x)$$

Here, R denotes a ring, $Z_q$ denotes a coefficient, and f(x) denotes an n-th polynomial.

The ring is a set of polynomials having predetermined coefficients, and means a set in which addition and multiplication are defined between elements and which is closed for addition and multiplication.

For example, the ring R means a set of n-th polynomials having a coefficient Zq. Specifically, when n is $\Phi(N)$, it refers to polynomials that may be calculated as the remainder of dividing the polynomial by an N-th cyclotomic polynomial.

In Equation 2, f(x) denotes ideal of $Z_q[x]$ generated by the f(x). The Euler totient function $\Phi(N)$ means the number of natural numbers that is coprime to N and smaller than N. When $\Phi_N(x)$ is defined as an N-th cyclotomic polynomial, the ring may also be represented by Equation 3 as follows.

## [Equation 3]

$$R= Z_q[X]/\Phi_N(x)$$

Meanwhile, the ring R of the above-described Equation 3 may have binary data in the plaintext space. When such a ring is set, the external device 200-1 may calculate the secret key sk from the ring. The secret key sk may be represented as follows.

$$[\text{Equation 4}]$$

$$sk \leftarrow (1, s(x)), s(x) \in R$$

Here, s(x) means a polynomial generated randomly with small coefficients.

The external device 200-1 calculates a first random polynomial a(x) from the ring. The first random polynomial may be expressed as follows.

$$[\text{Equation 5}]$$

$$a(x) \leftarrow R$$

In addition, the external device 200-1 may calculate an error. Specifically, the external device 200-1 may extract an error from a discrete Gaussian distribution or a distribution statistically close to the discrete Gaussian distribution. This error may be expressed as follows.

$$[\text{Equation 6}]$$

$$e(x) \leftarrow D^n_{\alpha q}$$

When the error is calculated, the external device 200-1 may calculate a second random polynomial by performing a modular operation on the error in the first random polynomial and the secret key. The second random polynomial may be expressed as follows.

$$[\text{Equation 7}]$$

$$b(x) = -a(x)s(x) + e(x)(\text{mod } q)$$

Finally, the public key pk is set as follows in a form including the first random polynomial and the second random polynomial.

$$[\text{Equation 8}]$$

$$pk = (b(x), a(x))$$

Since the above-described key generation method is only an example, it is not necessarily limited thereto, and it goes without saying that the public key and the secret key may be generated by other methods.

When the public key is generated, the external device 200-1 may generate the homomorphic ciphertext by applying the generated public key to the message to be encrypted. In this case, the external device 200-1 may generate a length of the ciphertext to correspond to the size of the scaling factor.

In this way, each external device 200-1 to 200-n may encrypt various messages using the generated encryption key and transmit the encrypted various messages to the electronic device 100 via the network 1.

In the present disclosure, a message includes various information or data to be transmitted, and in particular, may include data composed of binary data. In addition, the encryption may be homomorphic encryption, and the ciphertext may be the homomorphic ciphertext.

The electronic device 100 stores the ciphertexts received from each external device 200-1 to 200-n and may perform various operations on the ciphertexts when necessary.

For example, when ciphertexts ct1 and ct2 transmitted from the two external devices 200-1 and 200-2 are transmitted to the electronic device 100, the electronic device 100 may operate a value obtained by adding up the information provided from the two external devices 200-1 and 200-2. The electronic device 100 may perform various operations according to a request from at least one of the two external devices 200-1 and 200-2 or another external device.

The electronic device 100 may transmit the added operation result value ct1 + ct2 to the device that requests the operation. Due to the nature of the homomorphic ciphertext, the electronic device 100 may perform the operation without decrypting, and since the result value is also in the form of the ciphertext, even if each external device transmits the ciphertext to the electronic device 100, the risk of data in the ciphertext being leaked to the outside may be eliminated. The device receiving the operation result value may decrypt the received operation result ciphertext and acquire the operation result data of the data included in each homomorphic ciphertext.

When the operation is completed, the electronic device 100 may perform rounding processing on the operation result data to detect data in a valid area. The rounding processing means rounding-off a message in an encrypted state, and may also be referred to as rescaling. Specifically, the electronic device 100 removes a noise area by multiplying each component of the ciphertext by $\Delta^{-1}$ which is the reciprocal of the scaling factor, and rounding-off each component of the ciphertext. The noise area may be determined to correspond to the size of the scaling factor. As a result, it is possible to detect a message in the effective area from which the noise area is excluded. Since it proceeds in the encrypted state, an additional error occurs, but the size is small enough to be ignored.

Meanwhile, the electronic device 100 may perform the operation several times according to the request. In this case, an approximate message proportions within the operation result ciphertexts obtained for each operation are different. The electronic device 100 may perform a reboot if the approximate message proportion exceeds the threshold. The reboot may be an operation of expanding the plaintext space in the ciphertext. The reboot may also be expressed differently as bootstrapping, plaintext space expansion, etc.

Specifically, when q is less than M in Equation 1 described above, since M+e (mod q) has a different value from M+e, the decryption becomes impossible. Therefore, the q value should always be kept greater than M. However, as the operation progresses, the q value gradually decreases. Therefore, an operation of changing the q value so that the q value is always greater than M is required, and this operation is called the bootstrapping operation. As the bootstrapping operation is performed, the ciphertext may be operated again.

Meanwhile, as described above, when the message included in the ciphertext is binary data expressed as 0 or 1, there was a problem that the processing such as the reboot was inefficient according to the conventional processing method. Accordingly, the present disclosure discloses various embodiments for effectively processing the ciphertext obtained by homomorphically encrypting the message composed of the binary data.

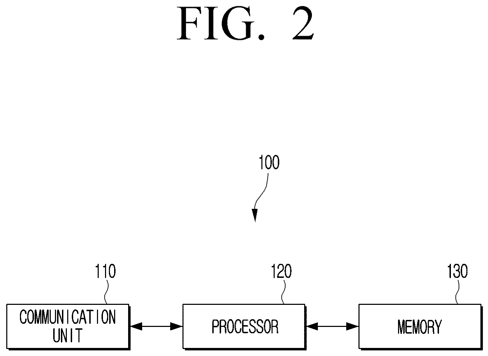

FIG. 2 is a block diagram illustrating a configuration of an electronic device according to at least one embodiment of the present disclosure. Referring to FIG. 2, the electronic device 100 includes a communication unit 110, a processor 120, and a memory 130.

The communication unit 110 is a configuration for performing communication with various external devices 200-1 to 200-n or other devices.

The communication unit 110 may include at least one wireless communication module, at least one wired communication module, etc. Each communication module may be implemented in the form of at least one hardware chip.

For example, the wireless communication module may include at least one of a Wi-Fi module, a Bluetooth module, an infrared communication module, or other communication modules. In addition, the communication unit 110 may include at least one communication chip performing communication according to various wireless communication standards such as zigbee, 3rd generation (3G), 3rd generation partnership project (3GPP), long term evolution (LTE), LTE advanced (LTE-A), 4th generation (4G), 5th generation (5G), and the like, in addition to the communication manner described above.

For example, the wired communication module 140 may include at least one of a local area network (LAN) module, an Ethernet module, a pair cable, a coaxial cable, an optical fiber cable, or an ultra wide-band (UWB) module.

The communication unit 110 may receive the ciphertexts of each external device 200-1 to 200-n by at least one of the various communication methods described above. The received ciphertext may be stored in the memory 130 under the control of the processor 120.

The memory 130 may be implemented in various forms such as a volatile memory (for example, a dynamic random access memory (DRAM), a static RAM (SRAM), a synchronous dynamic RAM (SDRAM), or the like), a non-volatile memory (for example, a one time programmable read only memory (OTPROM), a programmable ROM (PROM), an erasable and programmable ROM (EPROM), an electrically erasable and programmable ROM (EEPROM), a mask ROM, a flash ROM, a flash memory (for example, a NAND flash, a NOR flash, or the like), a hard drive, and a solid state drive (SSD)).

The memory 130 may store various data including the ciphertext received through the communication unit 110, various basic information and programs required for various processing such as the operation or reboot, and the like.

The processor 120 may perform various processing tasks on the homomorphic ciphertext such as the operation or reboot based on various programs and data stored in memory 130. When the processor 120 performs the operation, the reboot, etc., the processor 120 may store the result value in the memory 130.

In FIG. 2, the communication unit 110, the processor 120, and the memory 130 are each illustrated one by one, but the number and type of each component are not limited thereto, and these components may be implemented in plural. In addition, various components such as a display, an input/output interface, and a sensor may be further included depending on the type of the electronic device 100.

As described above, when the ciphertext obtained by homomorphically encrypting the message composed of the binary data is received and stored in the memory 130, the processor 120 may perform the reboot when the plaintext space of the ciphertext is lower than a preset threshold. In the present disclosure, rebooting the ciphertext for the binary data is referred to as a BinBoot task.

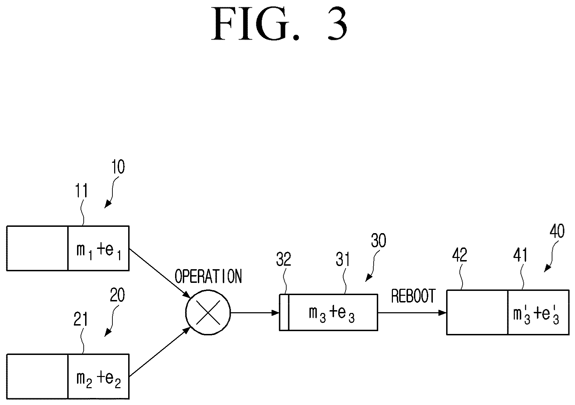

FIG. 3 is a diagram for specifically describing the reboot process. For convenience of description, FIG. 3 illustrates the operation and reboot process for two ciphertexts 10 and 20, but the operation and reboot may also be performed on two or more ciphertexts.

Each ciphertext 10 and 20 may include approximate message areas 11 and 21, respectively. The approximate message areas 11 and 21 include messages and errors m1+e1 and m2+e2 together.

The processor 120 may perform a specific operation using the two ciphertexts 10 and 20 as input values, and acquire the operation result data 30. Since the two ciphertexts 10 and 20 are the homomorphic ciphertexts, the operation result data may also be an operation result ciphertext 30.

The operation result ciphertext 30 may include an approximate message area 31 including an operation result m3+e3 between each approximate message. As the operation result becomes greater than the input value, the approximate message area also increases, so the remaining plaintext space 32 decreases. When this operation is performed several times, the remaining plaintext space 32 eventually disappears or becomes smaller than the limit value, so the operation may not be performed. When it is determined to be in this state, the processor 120 may perform the reboot process.

In the rebooted ciphertext 40, it can be seen that the approximate message area 41 is constant and the plaintext space 42 is expanded.

In this way, the reboot method may perform the continuous operation processing on the homomorphic ciphertext in that it expands the plaintext space.

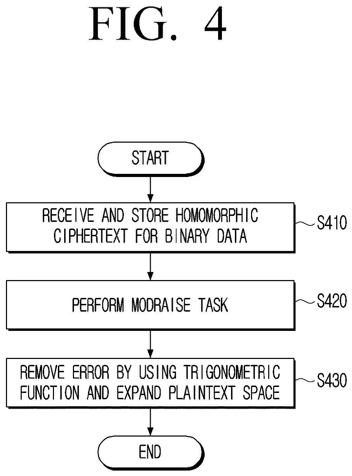

FIG. 4 is a flowchart specifically describing an example of a processing method of the ciphertext for the binary data. Referring to FIG. 4, when the processor 120 receives the homomorphic ciphertext for the binary data (i.e., binary data), the processor 120 stores the homomorphic ciphertext (S410).

In this state, when the processor 120 determines that the ciphertext needs to be rebooted, the processor 120 performs a ModRaise task that expands the modulus of the ciphertext (S420). For example, when a ModRaise task using a large modulus Q is performed on the ciphertext obtained by encrypting pt, an error such as $q_0 I$ occurs. Here, $q_0$ indicates a base modulus, and I denotes a small-magnitude integer polynomial.

When the modulus of the ciphertext is expanded by the ModRaise task, the processor 120 applies the trigonometric function to the ciphertext with the increased modulus to remove the errors in the ciphertext and perform an operation to expand the plaintext space in the ciphertext (S430). This task is otherwise called an EvalMod task. The processor 120 may perform the EvalMod task by evaluating a polynomial approximation of an appropriate scaling of the trigonometric function. For example, when the input for an integer I and a small-sized real number x is $x+(2\pi)\cdot I$,

An EvalMod task may be performed using a trigonometric function such as $\sin(x + (2\pi) \cdot I) \approx x$.

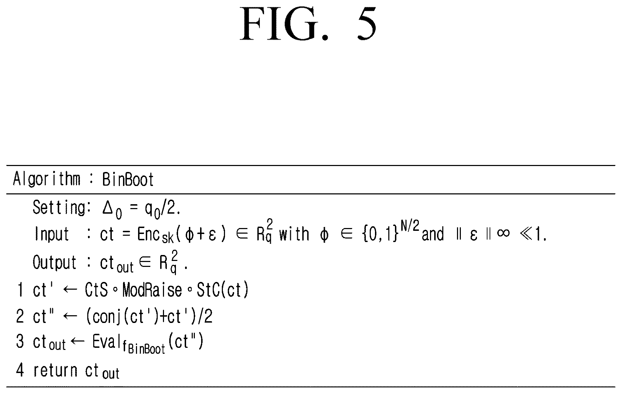

FIG. 5 is a diagram for describing the process of rebooting the homomorphic ciphertext for the binary data. Referring to FIG. 5, when the ciphertext ct which is modulus $q_0$ is input, the processor 120 sets the base scaling factor $\Delta_0$ to $q_0/2$. $q_0$ indicates the base modulus used for the reboot. When the size of the base scaling factor is set to be small, such as half of the existing base modulus, the speed at which the plaintext space may decrease when each operation on the ciphertext is performed may be reduced.

The ciphertext ct may be expressed as the following Equation.

[Equation 9]

$$ct = Enc_{sk}(\psi + \varepsilon) \in R_{q_0}^2 \text{ with } \psi \in \{0,1\}^{N/2} \text{ and } \| \varepsilon \|_{\infty} \ll 1$$

In the above Equation 9, $\varphi$ may be binary data, and $\varepsilon$ may be an error.

The processor 120 may sequentially perform the slot to coefficient (StC) task, the ModRaise task, and the CtS task on the ciphertext ct to acquire the transformed ciphertext ct'. The StC task may be a task for transforming the multiple slot values in the ciphertext ct into the multiple coefficient values. Alternatively, the StC task may be called the first transformation task.

For example, when the StC task assumes that the ciphertext is decrypted into a vector z, the StC may be a task for transforming the coefficient of the ciphertext into a ciphertext whose coefficient is decrypted with a polynomial plaintext z(x) that is a series of z. The StC task may be composed of homomorphically multiplying by a discrete Fourier transform (DFT) matrix.

On the other hand, the CtS task refers to a task for transforming the coefficient values of the ciphertext into slot values. The CtS task may be also called a second transformation task. For example, the CtS task may be a task for transforming the ciphertext decrypted with the polynomial plaintext $z(x)+q_0I(x)$ into the ciphertext decrypted with the vector $z+q_0I$. The CtS task may be composed of homomorphically multiplying by the discrete Fourier transform (DFT) matrix.

The DFT matrix is a matrix for performing ring homomorphism between elements of a ring $R_N$ of a coefficients space and complex vectors of $C^{N/2}$ of the slots space. According to the DFT, the polynomial multiplication may be mapped to component-wise multiplication.

For example, the task for transforming $R_N \rightarrow C^{N/2}$ may be expressed by the following Equation.

[Equation 10]

$$\forall p \in R_N : Dcd(p) = \frac{1}{\Delta} \cdot DFT(p)$$

Here, $\Delta$ represents a scaling factor associated with the plaintext coefficient p. The CtS task, such as Equation 10, may be called denoding mapping.

Meanwhile, the task for transforming $C^{N/2} \rightarrow R_N$ may be expressed by the following Equation.

[Equation 11]

$$\forall z \in C^{N/2}: Ecd(z) = \lfloor \Delta \cdot iDFT(z) \rceil$$

The task like Equation 11 may also be called encoding mapping.

Meanwhile, the expressions "first," "second," etc., in the first and second transformation tasks are described to distinguish each transformation task, and the numbers do not mean the order of each task.

As described above, the transformed ciphertext ct' acquired by sequentially performing the StC task, the ModRaise task, and the CtS task may be expressed as follows.

[Equation 12]

$$ct' = Enc_{sk}((\varphi + \varepsilon_1)/2 + I)$$

The processor 120 acquires the transformed ciphertext ct" by changing $\varepsilon_1$ in Equation 12 $(\varphi + \varepsilon_1)/2 + I$ to a small-sized vector $\varepsilon_2$ belonging to $R^{N/2}$. The transformed ct" may be expressed as follows.

[Equation 13]

$$ct" = Enc_{sk}((\varphi + \varepsilon_2)/2 + I)$$

The processor 120 applies Eval_$f_{BinBoot}$, which is a homomorphic evaluation algorithm using $f_{BinBoot}(t)$, to the transformed ct" to remove errors and expand the plaintext space. $f_{BinBoot}(t)$ may include a trigonometric function.

For example, $f_{BinBoot}(t)$ may be expressed as follows.

[Equation 14]

$$f_{BinBoot}(t)=(1-con2\pi x)/2$$

As a result, the processor 120 may obtain ciphertext $ct_{out}$ having a small-sized error $\varepsilon_{out}$ belonging to $R^{N/2}$. $ct_{tout}$ may be expressed as follows.

[Equation 15]

$$ct_{out} = Enc_{sk}((\varphi + \varepsilon_{out})$$

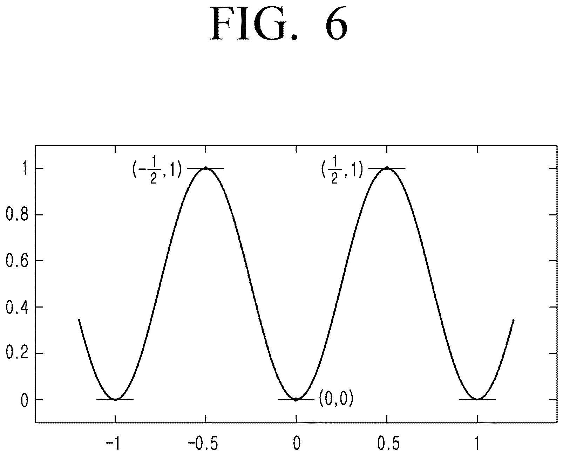

FIG. 6 is a graph showing an example of $f_{BinBoot}(t)$ which is the trigonometric function used for rebooting the binary data.

Referring to FIG. 6, it can be seen that the ciphertext is transformed so that a valid plaintext is located at maximum peak and minimum peak parts of the trigonometric function. Referring to FIG. 6, it can be seen that a gap between the scaling factor and the modulus is significantly reduced and thus a smaller $q_0$ may be selected, so the modulus reduction speed may be significantly reduced. In addition, since a derivative of $f_{BinBoot}(t)$ vanishes for $x \in (1/2)Z$, numerical inaccuracy may be reduced.

In the above, the BinBoot task according to an embodiment of the present disclosure has been described in detail. According to another embodiment of the present disclosure, the processor 120 may perform not only the BinBoot task but also the gate operation reboot task.

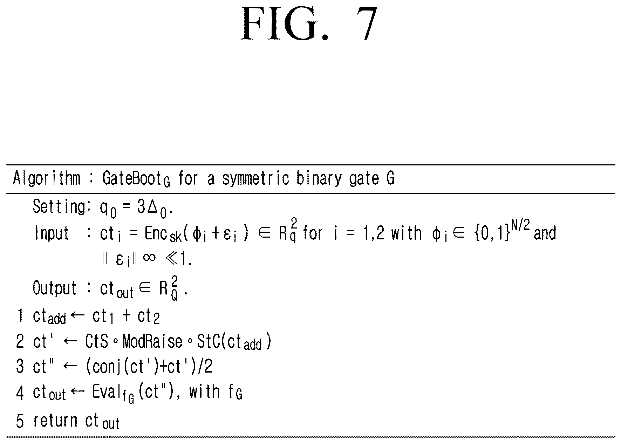

FIG. 7 is a diagram for describing the gate operation reboot process according to at least one embodiment of the present disclosure. According to the algorithm of FIG. 7, the processor 120 may perform the gate operation simultaneously with rebooting the ciphertexts obtained by homomorphically encrypting the message composed of the binary data.

Referring to FIG. 7, the processor 120 first sets the modulus $q_0$ to $3\Delta_0$.

The ciphertext may be expressed in the following format.

[Equation 16]

$$ct_i = Enc_{sk}(\varphi_i + \varepsilon_i) \in R_q^2 \text{ for } i = 1,2 \text{ with } \varphi_i \in \{0,1\}^{N/2}$$

In the above Equation 16, the error $\varepsilon_i$ satisfies condition $\|\varepsilon_i\|_\infty \ll 1$.

The processor 120 performs the gate operation on two ciphertexts ct1 and ct2 having the modulus $q_0$ to acquire $ct_{add}$.

The processor 120 sequentially performs the StC task, the ModRaise task, and the CtS task on the added ciphertext to sequentially acquire the transformed ciphertexts ct' and ct". The second and third steps of FIG. 7 are the same as the first and second steps of FIG. 5, and since this has been described in detail with reference to FIG. 5, a redundant description will be omitted.

The slot of the acquired ct" includes $(\varphi_1 + \varphi_2 + \varepsilon)/3 + 1$. Here, $\varepsilon$ is a small-sized error belonging to $R^{N/2}$, and I is a small-sized integer vector belonging to $Z^{N/2}$.

The fourth step of FIG. 7 is a step of applying a trigonometric function $f_G$ to the transformed ciphertext ct" and rebooting the transformed ciphertext ct". The processor 120 may remove the error I and transform $\psi_1 + \psi_2$ into $G\odot(\psi_1, \psi_2)$ while performing the fourth step.

The trigonometric function $f_G$ used for the gate operation reboot may be implemented in various forms depending on the type of gate operation.

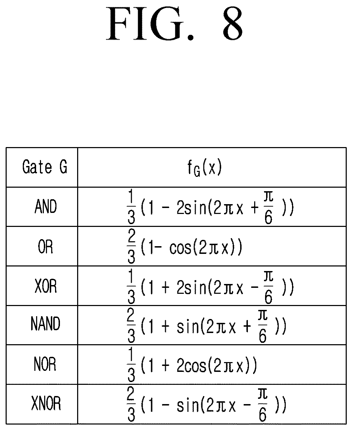

FIG. 8 illustrates specific examples of the trigonometric function used for the gate operation reboot of FIG. 7. In FIG. 8, it can be seen that various trigonometric functions $f_G$ are used for each operation such as AND, OR, XOR, NAND, NOR, and XNOR.

For example, when performing a NAND gate, the following value may be obtained.

$$\text{If } x_0 = x_1 = 0, x_0 + x_1 = 0 \text{ and, } f_{NAND}(0) = 1 = NAND(0,0)$$

$$\text{If } x_0 = 1 \text{ and } x_1 = 0, x_0 + x_1 = 1 \text{ and, } f_{NAND}(1/3) = 1 = NAND(1,0)$$

$$\text{If } x_0 = x_1 = 1, x_0 + x_1 = 2, \text{ and } f_{NAND}(2/3) = 0 = NAND(1,1)$$

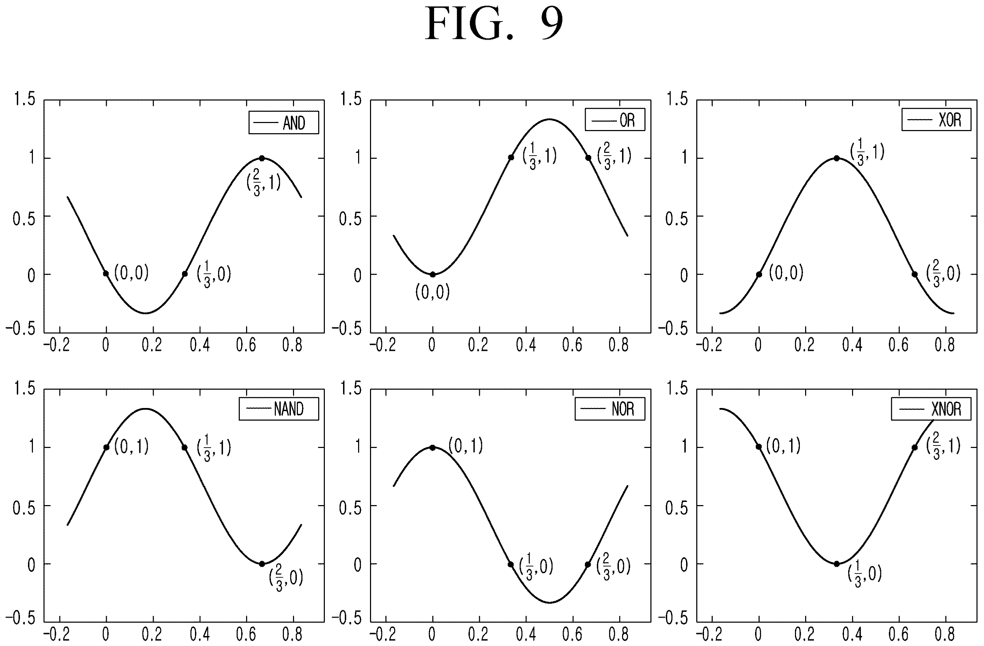

FIG. 9 shows the graphs of each trigonometric function of FIG. 8. Specifically, it shows the graphs of the trigonometric functions used in an AND gate, an OR gate, a XOR gate, a NAND gate, a NOR gate, a XNOR gate, etc.

Referring to FIG. 9, it can be seen that 0 or 1/3, 2/3 points are not always located at the peaks in all the gate operations. For example, points (0,0) and (1/3,0) of the AND gate graph, points (1/3,1) and (2/3,1) of the OR gate graph, points (0,0) and (2/3,0) of the XOR gate graph, points (0,1) and (1/3,1) of the NAND gate graph, points (1/3,0) and (2/3,0) of the NOR gate graph, and points (0,1) and (2/3,1) of the XNOR gate graph are not located at the peaks of the trigonometric function graphs. This means that derivatives at the corresponding points are not removed.

Accordingly, in other embodiments of the present disclosure, the trigonometric functions may be changed so that these points may also be located at peaks.

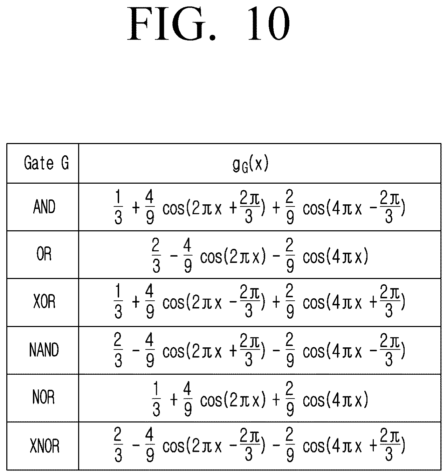

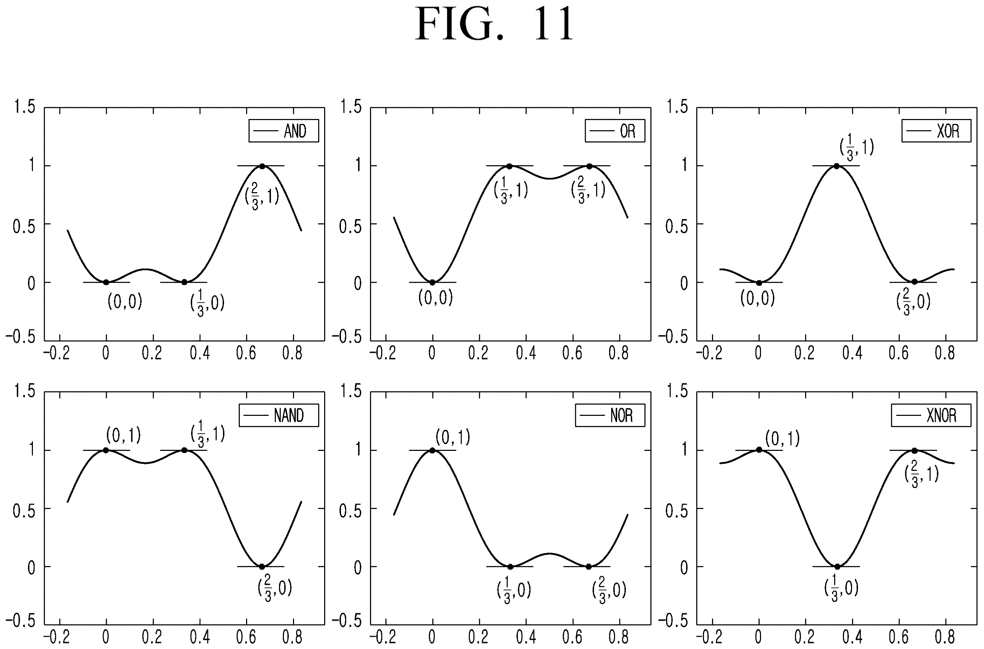

FIG. 10 shows the type of trigonometric functions used for the gate operation reboot according to other embodiments of the present disclosure, and FIG. 11 shows graphs of each trigonometric function of FIG. 10.

According to FIG. 10, the AND gate, the OR gate, the XOR gate, the NAND gate, the NOR gate, and the XNOR gate may be composed of a combination of more complex trigonometric functions than FIG. 8. When the above-described gate operation reboot is performed using the trigonometric functions $g_G(x)$ of FIG. 10, as illustrated in FIG. 11, points 0, 1/3, and 2/3 are located at the peaks in all the gate operations.

Meanwhile, FIG. 7 describes a case in which the gate operation reboot is performed on the two ciphertexts ct1 and ct2, but the number of ciphertexts may be greater.

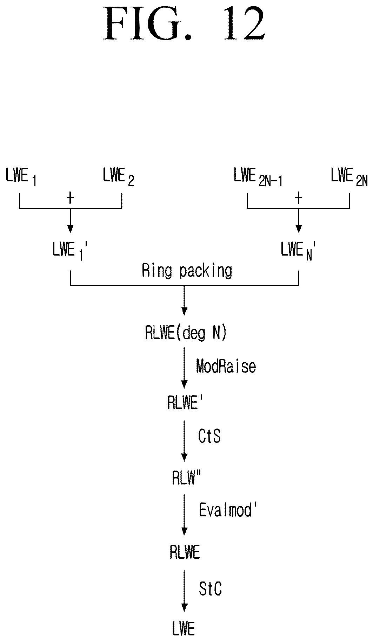

FIG. 12 is a diagram for describing in detail a process of performing the gate operation reboot on the plurality of ciphertexts.

Referring to FIG. 12, in a state in which there are a plurality of LWE ciphertexts $LWE_1$ to $LWE_{2N}$, the processor 120 matches the homomorphic ciphertexts to be operated to perform the operation. In FIG. 12, an operation of adding 2N ciphertexts by 2 each is performed to obtain $LWE_1'$ to $LWE_N'$.

The processor 120 performs a ring packing task on each of the operated ciphertexts to transform the ciphertexts into one ring learning with errors (R-LWE) ciphertext.

The processor 120 performs THE ModRaise task on the R-LWE ciphertext to increase the modulus. Since the ModRaise task has been specifically described in the above-described section, a redundant description will be omitted.

The processor 120 performs the CtS task on an R-LWE' whose modulus has been increased by the ModRaise task to transform a coefficient value of the R-LWE' into a slot value.

The processor 120 applies the trigonometric function to the transformed ciphertext R-LWE" to remove the errors of the R-LWE" and expand the plaintext space. These steps may be called an 'Evalmod' step.

The processor 120 may acquire the RLWE ciphertext by performing the StC task to transform the slot values of the R-LWE" whose plaintext space is expanded back into coefficient values, and then acquire N LWE ciphertexts therefrom. Each LWE corresponds to an operation result ciphertext to which the gate operation is applied.

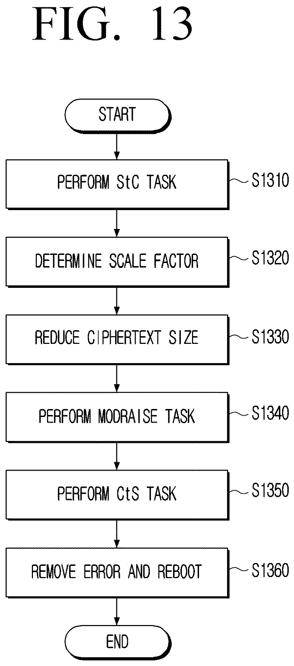

FIG. 13 is a flowchart for describing a method of processing a homomorphic ciphertext according to an embodiment of the present disclosure.

Referring to FIG. 13, the electronic device performs a first transformation task, i.e., a StC task, to transform the plurality of slot values in the ciphertext into the plurality of coefficient values (S1310). In addition, the electronic device may select an appropriate scaling factor for reducing the message in the ciphertext by a preset size from among a pre-stored scaling factor set (S1320).

The electronic device may reduce the size of the ciphertext by applying the scaling factor to the ciphertext transformed by the first transformation task (S1330). For example, as illustrated in FIG. 5, when the scaling factor is set to half the size of the base modulus, such as $q_0/2$, the size of the ciphertext may be reduced by half.

In this state, the electronic device may increase the modulus by performing the ModRaise task on the reduced ciphertext (S1340). The electronic device performs the second transformation task, i.e., the CtS task, to transform the coefficient of the ciphertext with the increased modulus into the slot value (S1350).

The electronic device applies the trigonometric function to the ciphertext transformed by p in the second transformation task to remove the errors in the ciphertext and performs the reboot to expand the plaintext space (S1360). That is, the reboot may be performed on the homomorphic ciphertext of the binary data.

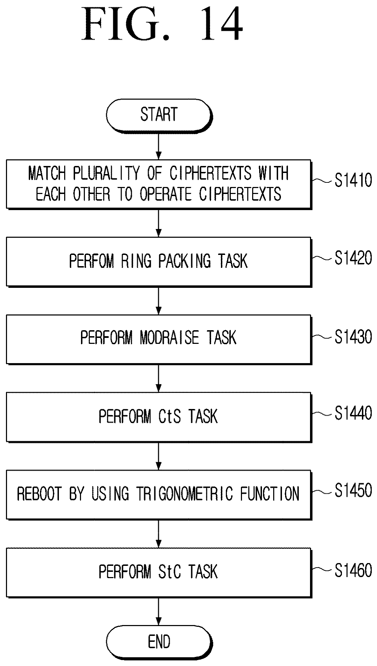

FIG. 14 is a flowchart for describing a method of processing a homomorphic ciphertext according to another embodiment of the present disclosure. According to FIG. 14, when the plurality of ciphertexts are provided, the electronic device matches the plurality of ciphertexts to a certain number and performs the operation (S1410).

The electronic device may perform the ring packing task to make the operation results into one R-LWE ciphertext (S1420). Since various ring packing methods have been known, a detailed description thereof will be omitted.

The electronic device performs the ModRaise task on the generated R-LWE ciphertext (S1430), and then performs the CtS task to transform the coefficient values into the slot values (S1440).

The electronic device may perform the gate operation reboot by using the trigonometric function to remove the errors in the R-LWE ciphertext and expand the plaintext space (S1450). Since the type and example of trigonometric functions used in the gate operation reboot are described in FIGS. 8 to 11, a redundant description will be omitted.

The electronic device may perform the transformation task that converts the slot value of the R-LWE ciphertext with the plaintext space expanded into the coefficient value to acquire the LWE ciphertext to which the gate operation is applied (S1460).

Various processing methods described in FIGS. 4, 13, and 14 may be performed by the electronic device having the configuration illustrated in FIG. 2, but are not necessarily limited thereto, and may also be performed by another device having a different configuration.

In the above, various embodiments each have been described, but each embodiment is not necessarily implemented individually, and may be combined wholly or in part with at least one other embodiment and implemented together in one product.

According to various embodiments above, when homomorphically encrypted cipher data is assigned as a node value, decision making may be performed efficiently while minimizing the number of times of comparison operations.

Various embodiments of the present disclosure may be implemented by software including instructions stored in a machine-readable storage medium (for example, a computer-readable storage medium).

Specifically, there may be provided a non-transitory readable storage medium in which software for making a decision is stored by sequentially performing the steps of receiving and storing the ciphertext obtained by homomorphically encrypting the binary data from at least one external device, performing the ModRaise task for increasing the modulus of the ciphertext, and applying the trigonometric function to the ciphertext having the increased modulus to remove the errors in the ciphertext and expanding the plaintext space in the ciphertext.

The device equipped with such a non-transitory readable medium may perform the method of processing a homomorphic ciphertext described in various embodiments described above.

In the non-transitory readable-storage medium, the term "non-transitory" means that the storage medium is tangible without including a signal, and does not distinguish whether data are semi-permanently or temporarily stored in the storage medium.

Alternatively, a program for performing the method according to various embodiments described above may be distributed online through an application store. In a case of the online distribution, at least portions of the computer program product may be at least temporarily stored in a storage medium such as a memory of a manufacturer server, an application store server, or a relay server or be temporarily created.

Each of the components (for example, modules or programs) according to various embodiments may include a single entity or a plurality of entities, and some of the corresponding sub-components described above may be omitted or other sub-components may be further included in various embodiments. Alternatively or additionally, some of the components (e.g., the modules or the programs) may be integrated into one entity, and may perform functions performed by the respective corresponding components before being integrated in the same or similar manner. Operations performed by the modules, the programs, or the other components according to various embodiments may be executed in a sequential manner, a parallel manner, an iterative manner, or a heuristic manner, at least some of the operations may be performed in a different order or be omitted, or other operations may be added.

Although the present disclosure has been described with reference to the accompanying drawings, the scope of the present disclosure is determined by the claims to be described below and should not be construed as being limited to the foregoing embodiments and/or drawings. In addition, it should be clearly understood that improvements, changes and modifications obvious to those skilled in the art of the disclosure described in the claims are also included in the scope of the present disclosure.

**Claims**

1. An electronic device, comprising:

   a communication unit;
   a memory; and
   a processor,
   wherein the processor is configured to:

   based on a ciphertext obtained by homomorphically encrypting binary data being received from at least one external device through the communication unit, store the ciphertext in the memory,
   perform a ModRaise task for increasing a modulus of the ciphertext, and
   apply a trigonometric function to the ciphertext having the increased modulus to remove an error in the ciphertext, and expand a plaintext space in the ciphertext.

2. The electronic device as claimed in claim 1,
   wherein the processor is configured to:

   perform a first transformation task for transforming a plurality of slot values in the ciphertext into a plurality of coefficient values,
   select a scaling factor for reducing a message in the ciphertext by a preset size from among a scaling factor set pre-stored in the memory,
   apply the selected scaling factor to the ciphertext transformed by the first transformation task for reducing the size of the ciphertext and perform the ModRaise task on the reduced ciphertext,
   perform a second transformation task for transforming the coefficient value of the ciphertext having the modulus increased by the ModRaise task into the slot value, and
   apply the trigonometric function to the ciphertext transformed by the second transformation task.

3. The electronic device as claimed in claim 1,
   wherein, the processor is configured to:

   based on the number of ciphertexts stored in the memory being plural, match ciphertexts to be operated among the plurality of ciphertexts to operate the ciphertexts,
perform a ring packing task for transforming each of the operated ciphertexts into one ring learning with errors (R-LWE) ciphertext, and
perform the ModRaise task on the R-LWE ciphertext.

4. The electronic device as claimed in claim 3,
wherein the processor is configured to:

transform a coefficient value of the R-LWE ciphertext having the modulus increased by the ModRaise task into a slot value,
perform a gate operation reboot to remove an error in the transformed R-LWE ciphertext and to expand the plaintext space by applying the trigonometric function to the transformed R-LWE ciphertext to, and
transform the slot value of the R-LWE ciphertext with the expanded plaintext space into a coefficient value to acquire an LWE ciphertext to which the gate operation is applied.

5. A method of processing a homomorphic ciphertext of an electronic device, comprising:

receiving and storing a ciphertext obtained by homomorphically encrypting binary data from at least one external device;
performing a ModRaise task for increasing a modulus of the ciphertext; and
applying a trigonometric function to the ciphertext having the increased modulus to remove the error in the ciphertext, and expanding a plaintext space in the ciphertext.

6. The method as claimed in claim 5, wherein the performing of the ModRaise task includes:

performing a first transformation task for transforming a plurality of slot values in the ciphertext into a plurality of coefficient values;
selecting a scaling factor for reducing a message in the ciphertext by a preset size from among a pre-stored scaling factor set;
reducing a size of the ciphertext by applying the selected scaling factor to the ciphertext transformed by the first transformation task ; and
performing the ModRaise task on the reduced ciphertext, and
the expanding of the plaintext space includes:

performing a second transformation operation for transforming the coefficient value of the ciphertext having the increased modulus by the ModRaise task into a slot value; and
applying the trigonometric function to the ciphertext transformed by the second transformation task for removing an error in the ciphertext, and expanding the plain text space in the ciphertext.

7. The method as claimed in claim 5, further comprising:

based on the number of ciphertexts is plural, matching ciphertexts to be operated among the plurality of homomorphic ciphertexts to operate the ciphertexts; and
performing a ring packing task for transforming each of the operated ciphertexts into one ring learning with errors (R-LWE) ciphertext,
wherein the ModRaise task is applied to the R-LWE ciphertext.

8. The method as claimed in claim 7,
wherein the expanding of the plaintext space in the ciphertext includes:

performing a transformation task for transforming a coefficient value of the R-LWE ciphertext having the modulus increased by the ModRaise task into a slot value;
performing a gate operation reboot to remove an error in the transformed R-LWE ciphertext and to expand the plaintext space by applying the trigonometric function to the transformed R-LWE ciphertext; and
performing a transformation task for transforming slot values of the R-LWE ciphertext in which the plaintext space is expanded into coefficient values to acquire an LWE ciphertext to which the gate operation is applied.

# FIG. 1

# FIG. 2

100

| 110 | 120 | 130 |
| --- | --- | --- |
| COMMUNICATION UNIT | PROCESSOR | MEMORY |

# FIG. 3

# FIG. 4

```
        ┌──────────┐
        │  START   │
        └────┬─────┘
             ▼
┌─────────────────────────────┐
│ RECEIVE AND STORE HOMOMORPHIC│── S410
│  CIPHERTEXT FOR BINARY DATA  │
└──────────────┬──────────────┘
               ▼
┌─────────────────────────────┐
│    PERFORM MODRAISE TASK     │── S420
└──────────────┬──────────────┘
               ▼
┌─────────────────────────────┐
│ REMOVE ERROR BY USING TRIGONOMETRIC │── S430
│ FUNCTION AND EXPAND PLAINTEXT SPACE │
└──────────────┬──────────────┘
               ▼
        ┌──────────┐
        │   END    │
        └──────────┘
```

# FIG. 5

---

Algorithm : BinBoot

Setting: $\Delta_0 = q_0/2$.

Input : $ct = Enc_{sk}(\phi+\varepsilon) \in R_q^2$ with $\phi \in \{0,1\}^{N/2}$ and $\|\varepsilon\|\infty \ll 1$.

Output : $ct_{out} \in R_q^2$.

1 $ct' \leftarrow CtS \circ ModRaise \circ StC(ct)$

2 $ct'' \leftarrow (conj(ct')+ct')/2$

3 $ct_{out} \leftarrow Eval_{f_{BinBoot}}(ct'')$

4 return $ct_{out}$

---

# FIG. 6

# FIG. 7

| Algorithm : $\text{GateBoot}_G$ for a symmetric binary gate G |
|---|
| Setting: $q_0 = 3\Delta_0$. |
| Input : $ct_i = \text{Enc}_{sk}(\phi_i + \varepsilon_i) \in R_q^2$ for $i = 1,2$ with $\phi_i \in \{0,1\}^{N/2}$ and $\|\varepsilon_i\|_\infty \ll 1$. |
| Output : $ct_{out} \in R_Q^2$. |
| 1  $ct_{add} \leftarrow ct_1 + ct_2$ |
| 2  $ct' \leftarrow \text{CtS} \circ \text{ModRaise} \circ \text{StC}(ct_{add})$ |
| 3  $ct'' \leftarrow (\text{conj}(ct')+ct')/2$ |
| 4  $ct_{out} \leftarrow \text{Eval}_{f_G}(ct'')$, with $f_G$ |
| 5  return $ct_{out}$ |

# FIG. 8

| Gate G | $f_G(x)$ |
|---|---|
| AND | $\frac{1}{3}(1 - 2\sin(2\pi x + \frac{\pi}{6}))$ |
| OR | $\frac{2}{3}(1 - \cos(2\pi x))$ |
| XOR | $\frac{1}{3}(1 + 2\sin(2\pi x - \frac{\pi}{6}))$ |
| NAND | $\frac{2}{3}(1 + \sin(2\pi x + \frac{\pi}{6}))$ |
| NOR | $\frac{1}{3}(1 + 2\cos(2\pi x))$ |
| XNOR | $\frac{2}{3}(1 - \sin(2\pi x - \frac{\pi}{6}))$ |

# FIG. 9

EP 4 679 762 A1

# FIG. 10

| Gate G | $g_G(x)$ |
|--------|----------|
| AND | $\frac{1}{3} + \frac{4}{9}\cos(2\pi x + \frac{2\pi}{3}) + \frac{2}{9}\cos(4\pi x - \frac{2\pi}{3})$ |
| OR | $\frac{2}{3} - \frac{4}{9}\cos(2\pi x) - \frac{2}{9}\cos(4\pi x)$ |
| XOR | $\frac{1}{3} + \frac{4}{9}\cos(2\pi x - \frac{2\pi}{3}) + \frac{2}{9}\cos(4\pi x + \frac{2\pi}{3})$ |
| NAND | $\frac{2}{3} - \frac{4}{9}\cos(2\pi x + \frac{2\pi}{3}) - \frac{2}{9}\cos(4\pi x - \frac{2\pi}{3})$ |
| NOR | $\frac{1}{3} + \frac{4}{9}\cos(2\pi x) + \frac{2}{9}\cos(4\pi x)$ |
| XNOR | $\frac{2}{3} - \frac{4}{9}\cos(2\pi x - \frac{2\pi}{3}) - \frac{2}{9}\cos(4\pi x + \frac{2\pi}{3})$ |

FIG. 11

# FIG. 12

# FIG. 13

START

PERFORM StC TASK — S1310

DETERMINE SCALE FACTOR — S1320

REDUCE CIPHERTEXT SIZE — S1330

PERFORM MODRAISE TASK — S1340

PERFORM CtS TASK — S1350

REMOVE ERROR AND REBOOT — S1360

END

# FIG. 14

```
                    ┌─────────────┐
                    │    START    │
                    └──────┬──────┘
                           │
            ┌──────────────▼─────────────────────┐
            │ MATCH PLURALITY OF CIPHERTEXTS WITH │──S1410
            │   EACH OTHER TO OPERATE CIPHERTEXTS │
            └──────────────┬─────────────────────┘
                           │
            ┌──────────────▼─────────────────────┐
            │      PERFOM RING PACKING TASK       │──S1420
            └──────────────┬─────────────────────┘
                           │
            ┌──────────────▼─────────────────────┐
            │        PERFORM MODRAISE TASK        │──S1430
            └──────────────┬─────────────────────┘
                           │
            ┌──────────────▼─────────────────────┐
            │          PERFORM CtS TASK           │──S1440
            └──────────────┬─────────────────────┘
                           │
            ┌──────────────▼─────────────────────┐
            │ REBOOT BY USING TRIGONOMETRIC FUNCTION│──S1450
            └──────────────┬─────────────────────┘
                           │
            ┌──────────────▼─────────────────────┐
            │          PERFORM StC TASK           │──S1460
            └──────────────┬─────────────────────┘
                           │
                    ┌──────▼──────┐
                    │     END     │
                    └─────────────┘
```

## INTERNATIONAL SEARCH REPORT

| | International application No. |
|---|---|
| | **PCT/KR2024/002953** |

| **A.** | **CLASSIFICATION OF SUBJECT MATTER** |
|---|---|

**H04L 9/00**(2006.01)i; **G06F 7/523**(2006.01)i; **G06F 7/72**(2006.01)i; **G06F 17/14**(2006.01)i; **G06F 7/544**(2006.01)i; **G06F 9/30**(2006.01)i; **G06F 9/38**(2006.01)i

According to International Patent Classification (IPC) or to both national classification and IPC

| **B.** | **FIELDS SEARCHED** |
|---|---|

Minimum documentation searched (classification system followed by classification symbols)

H04L 9/00(2006.01); G06F 21/60(2013.01); G06F 21/62(2013.01); G06F 21/71(2013.01); G06F 21/72(2013.01); G06F 7/556(2006.01); G09C 1/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 바이너리(binary), 동형(homomorphic), 암호문(encrypted message), 모듈러스 (modulus), 에러(error), 삼각함수(trigonometric function)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | KR 10-2020-0140182 A (SEOUL NATIONAL UNIVERSITY R&DB FOUNDATION et al.) 15 December 2020 (2020-12-15) See paragraphs [0052], [0064]-[0066] and [0081]; claim 8; and figure 2. | 1,5 |
| A | | 2-4,6-8 |
| Y | JP 2020-530577 A (CRYPTO LAB INC.) 22 October 2020 (2020-10-22) See paragraph [0104]; and claim 1. | 1,5 |
| A | KR 10-2020-0054119 A (KOREA UNIVERSITY RESEARCH AND BUSINESS FOUNDATION) 19 May 2020 (2020-05-19) See claims 1-5; and figures 7-9. | 1-8 |
| A | KR 10-2015-0043062 A (SEOUL NATIONAL UNIVERSITY R&DB FOUNDATION) 22 April 2015 (2015-04-22) See paragraphs [0092]-[0200]; and figures 1-5. | 1-8 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 June 2024** | **12 June 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/002953** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2017-0142419 A (SEOUL NATIONAL UNIVERSITY R&DB FOUNDATION) 28 December 2017 (2017-12-28)<br>     See claims 1-3. | 1-8 |

Form PCT/ISA/210 (second sheet) (July 2022)

**INTERNATIONAL SEARCH REPORT**
Information on patent family members

International application No.

**PCT/KR2024/002953**

| Patent document cited in search report | | | Publication date (day/month/year) | Patent family member(s) | | | Publication date (day/month/year) |
|---|---|---|---|---|---|---|---|
| KR | 10-2020-0140182 | A | 15 December 2020 | KR | 10-2452181 | B1 | 11 October 2022 |
| JP | 2020-530577 | A | 22 October 2020 | JP | 6964688 | B2 | 10 November 2021 |
| | | | | KR | 10-2040120 | B1 | 05 November 2019 |
| | | | | US | 11115182 | B2 | 07 September 2021 |
| | | | | US | 2020-0036511 | A1 | 30 January 2020 |
| | | | | WO | 2020-022598 | A1 | 30 January 2020 |
| KR | 10-2020-0054119 | A | 19 May 2020 | KR | 10-2213835 | B1 | 09 February 2021 |
| KR | 10-2015-0043062 | A | 22 April 2015 | CN | 102202375 | A | 28 September 2011 |
| | | | | KR | 10-1608515 | B1 | 01 April 2016 |
| KR | 10-2017-0142419 | A | 28 December 2017 | KR | 10-1971215 | B1 | 22 April 2019 |

Form PCT/ISA/210 (patent family annex) (July 2022)